# EUROPEAN PATENT SPECIFICATION

(11) **EP 3 904 719 B1**
(45) Date of publication and mention of the grant of the patent: **24.05.2023**
(21) Application number: 20382359.6
(22) Date of filing: 30.04.2020
(51) Int. Cl.: F16D 35/02

(54) **VISCOUS FLUID CLUTCH**
VISKOFLUIDKUPPLUNG
EMBRAYAGE DE LIQUIDE VISQUEUX

(43) Date of publication of application: 03.11.2021
(73) Proprietor: Cojali S.L., 13610 Campo de Criptana (ES)
(72) Inventor: RAMIREZ BLASCO, Ángel, 13610 Campo de Criptana (ES); DONADO HUERTAS, Antonio, 13610 Campo de Criptana (ES); INIESTA ORTIZ, Fernando, 13610 Campo de Criptana (ES); DEL SAZ PATIÑO, Jesús, 13610 Campo de Criptana (ES); PARRILLA GALLEGO, Manuel Victor, 13610 Campo de Criptana (ES); URDA GÓMEZ-TEMBLEQUE, Rubén, 13610 Campo de Criptana (ES)
(74) Representative: Plasseraud IP

(56) References cited:
- JP-U- H04 117 224
- US-A- 4 381 051
- US-A1- 2007 095 627

## Description

### BACKGROUND

This invention generally relates to viscous fluid clutches. Such viscous fluid clutches comprise a storage chamber and a work chamber connected to the storage chamber. A housing gets more or less coupled to a clutch plate connected to a drive shaft, the coupling being in function of a quantity of viscous fluid present in the work chamber. Such viscous fluid clutches are for example used to operate fans of vehicles. Viscous fluid clutches are disclosed in: US 2007/095627 A1, US 4 381 051 A and JP H04 117224 U.

### BRIEF DESCRIPTION OF THE DRAWINGS

FIG. 1 is an illustration of an example viscous fluid clutch.
FIG. 2 is an illustration of an example cooling method.
FIG. 3 is an illustration of another example cooling method.
FIG. 4 is an illustration of yet another example cooling method.
FIG. 5 is an illustration of an example cooling system and of an example electronic control unit.
FIG. 6 is an illustration of another example viscous fluid clutch.
FIG. 7 is another illustration of the example viscous fluid clutch of figure 6.

### DETAILED DESCRIPTION

Viscous fluid clutches are mechanical systems which can be used to regulate the mechanical coupling of different mechanical pieces in rotation. A viscous fluid clutch may increase, decrease or even suppress mechanical coupling of such pieces in rotation. In some cases, viscous clutches may be at rest for a certain period of time, for example when such viscous fluid clutches are associated to an engine which is turned off during such period. While at rest, a certain amount of viscous fluid may remain present in a work chamber, for example due to fluid migration while the clutch is at rest. In some cases, such remaining amount of viscous fluid in the work chamber will depend of a specific angular resting position of a clutch plate. Such remaining amount of viscous fluid in the work chamber will introduce a certain level of coupling when starting the system. In some cases, for example when the clutch serves to couple a fan for the cooling of an engine, introducing coupling at the start of the system may not be desired, for example because the engine does not require cooling at that moment. Clutches are indeed likely to be a source of noise and energy consumption. Such noise and energy consumption should be reduced while maintaining a satisfactory functionality. An object of this invention is to provide viscous fluid clutches which prevent undesired coupling, in particular when starting operating.

A clutch should be understood as a mechanical system permitting to couple or decouple a driving piece and a driven piece. When coupled by a clutch, a rotating driving piece will transfer some degree of rotation movement to the driven piece. The transfer takes place in a viscous fluid clutch using a viscous fluid which is present in a work chamber through a shearing force transmitted by the viscous fluid. When a work chamber is empty of fluid, coupling may be reduced, or even not take place at all. When a work chamber is filled with fluid, coupling may be high. Coupling may be reduced or increased by respectively reducing or increasing a quantity of viscous fluid present in a work chamber. In some examples, a viscous fluid comprises silicone oil. In some examples, a viscous fluid comprises particles of polymer or metal such as iron of diameter ranging from 5 to 10 micrometer in silicone oils. In some examples the viscous fluid has a viscosity of at least 2500cSt and up to 30000 cSt. In some examples the viscous fluid has a viscosity of at least 5000cSt and up to 30000 cSt (cSt is a centi stoke, where 1 cSt=1.0×10⁻⁶ m²s⁻¹).

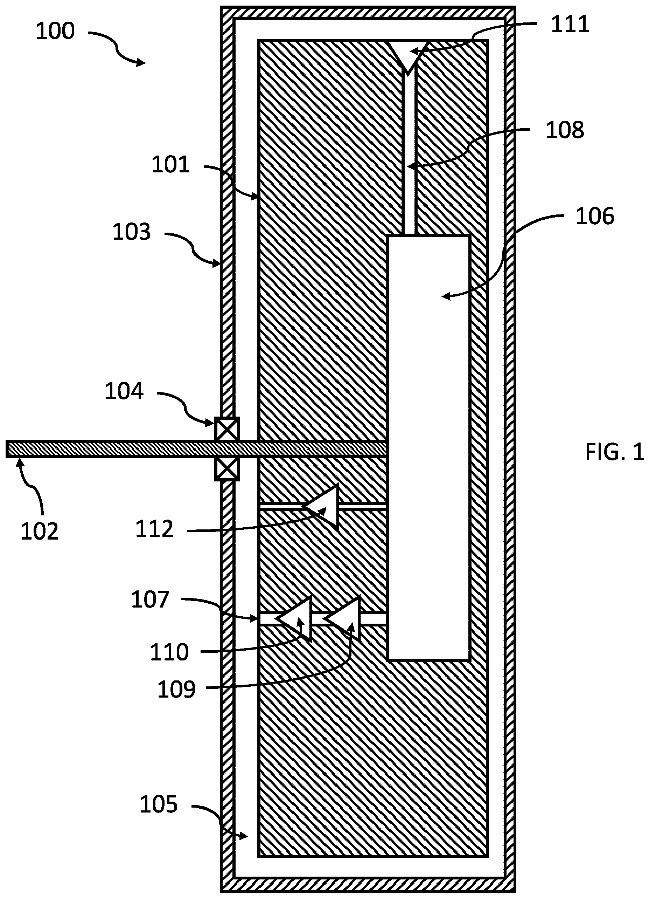

An example cross section of a viscous fluid clutch 100 according to this invention is illustrated in Figure 1. Viscous fluid clutch 100 comprises a clutch plate 101 and a drive shaft 102, the clutch plate 101 being fixedly driven by the drive shaft 102. A drive shaft should be understood according to his invention as a mechanical piece submitted to a rotation and transmitting such rotation to other mechanical pieces. In some examples, the drive shaft is rotated by an engine. In some examples, the drive shaft is rotated by a thermal engine. In some cases, the drive shaft is rotated by the engine of a vehicle. In some examples, the drive shaft is rotated by the engine of a road tractor, agricultural or off-highway vehicle, bus, car, truck or other types of vehicles. In some examples, the drive shaft is elongated and cylindrical and has a circular cross section, the rotation axis corresponding to the axis of the cylinder forming the drive shaft, the length of the of the cylinder forming the drive shaft being at least 3 times the diameter of the circular cross section. In some examples, the length of the of the cylinder forming the drive shaft is at least 4 times the diameter of the circular cross section. In some examples, the length of the cylinder forming the drive shaft is less than 6 times the diameter of the circular cross section. In some examples, the driveshaft is made of metal such as steel or aluminum for example. A clutch plate should be understood as a mechanical piece having an external surface which may at least partially be exposed to the viscous fluid in order to be submitted to shear forces when the clutch is in operation. In some examples, the clutch plate generally has a disk shape. The clutch plate according to this invention is fixedly driven by the drive shaft. Fixedly driven should be understood in that the clutch plate is fixed to the drive shaft in such a manner that a rotation of the drive shaft by a certain angle or angular speed produces a rotation of the clutch plate by the same angle or angular speed. In some examples, the clutch plate and the drive shaft are made of a single, integral piece. In some examples, the clutch plate and the drive shaft are different pieces which are for example tight fitted. In some examples, the clutch plate has a central orifice, the central orifice having a cross section corresponding to a cross section of the drive shaft in order to create a tight fit between the clutch plate and the drive shaft. In some examples, the central orifice and the drive shaft have a circular cross section. In some examples, the clutch plate is threaded onto the drive shaft. In some examples the clutch plate has a thickness along an axis or rotation of the drive shaft and an outside diameter. In some examples, the outside diameter of the clutch plate is at least 5 times larger than the thickness of the clutch plate. In some examples, the clutch plate is made of metal such as steel or aluminum for example. A clutch plate may be made of different pieces.

Example viscous fluid clutch 100 comprises a housing 103 rotatably supported by the drive shaft 102, the housing 103 surrounding the clutch plate 101, the housing comprising a work chamber 105 defining a shear space for the viscous fluid between the housing 103 and the clutch plate 101. A housing should be understood as a mechanical piece defining a cavity in which one or more other mechanical pieces are lodged or nested. A housing may be made of different pieces. According to this invention the housing is rotatably supported by the drive shaft. Rotatably supported should be understood in that a pivot junction exists between the drive shaft and the housing. The housing may be rotatably supported by the drive shaft by a bearing such as bearing 104. The housing according to this invention surrounds the clutch plate. This should be understood in that the clutch plate is housed within the housing. The housing according to this invention comprises a work chamber. A work chamber according to this invention is a cavity which may be at least partially filled with the viscous fluid, the work chamber comprising at least a first wall formed by the housing and at least another second wall formed by the clutch plate. Due to the clutch plate being fixed compared to the drive shaft, and the housing being rotatably connected to the drive shaft, a rotation differential may take place between the clutch plate and the housing, such that the work chamber may have its first wall and its second wall rotating at different speed, thereby generating a shear force in the shear space when viscous fluid is present in the work chamber, the shear force transmitting the rotation movement of the clutch plate to the housing through the viscous fluid. The shear space is the space occupied by the viscous fluid in the work chamber and in which shear forces may be transmitted between the clutch plate surface in contact with the viscous fluid in the work chamber and the housing surface in contact with the viscous fluid in the work chamber. The first and second walls may have shapes increasing their surface of contact with the fluid in order to increase shear force transmission from the clutch plate to the housing.

Example fluid clutch 100 comprises a storage chamber 106 for the viscous fluid, whereby the storage chamber is comprised in the clutch plate 101. A storage chamber should be in this invention understood as a cavity in which the viscous fluid may be stored instead of being in the wok chamber or in connections or channels between the work chamber and the storage chamber. The storage chamber is located in the clutch plate. The location of the storage chamber in the clutch plate has as a consequence that the movement of the storage chamber is directly linked to the movement of the drive shaft, permitting to avoid adding the weight of stored viscous fluid to the housing, which would add inertia to the housing and impact its coupling through the shear space. In addition to this, locating the storage chamber in the clutch plate permits that centrifuge force may act directly on the stored fluid when the driveshaft starts rotating, thereby distributing the fluid regardless of the amount of coupling. The storage chamber may be in some examples have a shape and location in the clutch plate permitting balancing or equilibrating the clutch plate when in rotation. In some examples, the storage chamber has a generally annular shape having the rotation axis of the drive shaft at its center. In some examples, the clutch plate comprises a base and a cover, the base comprising a cavity forming the storage chamber, the cavity being tightly closed by the cover, the cover being affixed to the base, the junction between the base and the cover comprising in some cases a seal.

Example fluid clutch 100 comprises a viscous fluid supply connection 107 and a viscous fluid return connection 108 connecting the storage chamber 106 and the work chamber 105, whereby the viscous fluid return connection 108 and the viscous fluid supply connection 107 are comprised within the clutch plate. The viscous fluid supply connection according to this invention permits passage from the storage chamber to the work chamber. The viscous fluid supply connection may comprise one or more channels. In some examples, the viscous fluid supply connection is located in the vicinity of the periphery of the clutch plate away from the drive shaft in order to permit movement of viscous fluid when the clutch plate is in rotation, the viscous fluid being pushed towards the periphery of the clutch plate by centrifuge force. The viscous fluid return connection according to this invention permits passage from the work chamber to the storage chamber. The viscous fluid return connection may comprise one or more channels. In some examples, an entry aperture of the viscous fluid return connection is located at the periphery of the clutch plate away from the drive shaft in order to collect viscous fluid when the clutch plate is in rotation, the viscous fluid being pushed towards the periphery of the clutch plate and into the entry aperture by centrifuge force, the viscous fluid being pushed through the entry aperture by pressure generated by a difference in angular velocity between the housing and the clutch plate. The viscous fluid connection and the viscous fluid supply connection are comprised within the clutch plate, permitting returning the viscous fluid back to the storage chamber which is also comprised in the clutch plate. Locating such fluid connections within the clutch plate permits submitting fluid present in such connections to be submitted to centrifuge force directly when the drive shaft is in motion, thereby avoiding a delay in fluid circulation or distribution if such connection would be located in the housing for example, meaning in a structural element which may not be directly linked to the driveshaft.

Example fluid clutch 100 comprises a first valve 109 located in the supply connection 107, the first valve 109 permitting to selectively increase the quantity of viscous fluid present in the work chamber. The first valve according to this invention should be understood as a valve which may selectively prevent or permit passage of viscous fluid through the supply connection. The first valve may be operated electrically, for example as a solenoid valve, or may be operated by temperature as a bimetal valve. An electrically operated first valve may be operated by an electronic control unit. An electrically operated first valve may be operated by an electronic control unit using a pulse width modulation generator comprising a controller.

Example fluid clutch 100 comprises a second valve 110 located in the supply connection 107 and closing the supply passage 107 when the drive shaft 102 is at rest, the second valve 110 being movable to an open position by a centrifuge force generated by rotation of the drive shaft 102 exceeding a predetermined centrifuge force threshold. The second valve according to this invention acts on the viscous fluid supply in combination with the first valve according to this invention Fluid supply from the storage chamber to the work chamber may take place when both the first and the second valves according to this invention are open. If either one or both of the first and second valves are closed, viscous fluid supply through the viscous fluid supply connection may not take place. The second valve according to this invention is movable to an open position by a centrifugal force generated by rotation of the drive shaft exceeding a predetermined centrifuge force threshold. This has as a consequence that the viscous fluid supply connection is closed by the second valve when the drive shaft is at rest, in other words when an angular velocity is zero. In some examples, the predetermined centrifuge force threshold is of more than zero, so that the second valve, and the viscous fluid supply connection, remains closed at angular velocities of the drive shaft below a threshold non-zero angular speed corresponding to the predetermined centrifuge force threshold. This behavior of the second valve according to this invention participates in this respect in avoiding migration of viscous fluid away from the storage chamber when the drive shaft is at rest, thereby avoiding or reducing an undesired coupling when starting the clutch from a resting position of the drive shaft. In some examples, the second valve is comprised in the clutch plate in order to be directly submitted to the movement of the drive axis. In some examples, the second valve is movable to an open position by a force generated by pressure from the viscous fluid in addition to the centrifuge force generated by rotation of the drive shaft. Such pressure in addition to the centrifuge force may be applied by viscous fluid located in the storage chamber. Such pressure in addition to the centrifuge force may be as a result of a pressure differential between viscous fluid in the work chamber and viscous fluid in the storage chamber.

Example fluid clutch 100 comprises a third valve 111 located in the viscous fluid return connection 108, the third valve 111 being a one-way valve selectively permitting the passage of viscous fluid from the work chamber 105 to the storage chamber 106 when the viscous fluid applies on the third valve 111 a pressure which exceeds a predetermined viscous fluid pressure threshold. In some examples, the third valve 111 is a mechanical valve which opens when fluid pressure is applied by viscous fluid from the work chamber. In some examples, the third valve is placed at the periphery of the clutch plate away from the drive shaft such that pressure from the viscous fluid from the work chamber is produced by the accumulation of viscous fluid in the periphery of the shear space by centrifugal force when the drive shaft is rotating and by the angular velocity differential between the housing and the clutch plate. Due to the third valve according to this invention being a one-way valve, such third valve prevents migration of viscous fluid from the storage chamber to the work chamber. In some example, the third valve permits balancing a pressure differential between a higher pressure in the work chamber and a lower pressure in the storage chamber, whereby viscous fluid may be pushed from the work chamber to the storage chamber through the third valve to balance such pressure differential.

Example fluid clutch 100 comprises a vent 112 for venting gas from the storage chamber to the work chamber. Such vent is a gas vent and does not permit passage of viscous fluid. Such vent permits venting for example as the storage chamber receives viscous fluid from the third valve 111 which the viscous fluid supply connection is closed by either one or both of the first and second valves.

Example fluid clutch 100 is such that an enclosure comprising the connected storage and work chambers is hermetic. It should be understood that such hermetic enclosure comprises the storage chamber, the work chamber, and any volume fluidly connected, directly or indirectly, to either the storage or work chambers. The supply and return connections are for example comprised in the hermetic enclosure. The enclosure is hermetic in that no viscous fluid may escape the enclosure. The enclosure may also be considered leak tight. A fluidic system comprising the work and storage chambers may be considered a closed fluidic system.

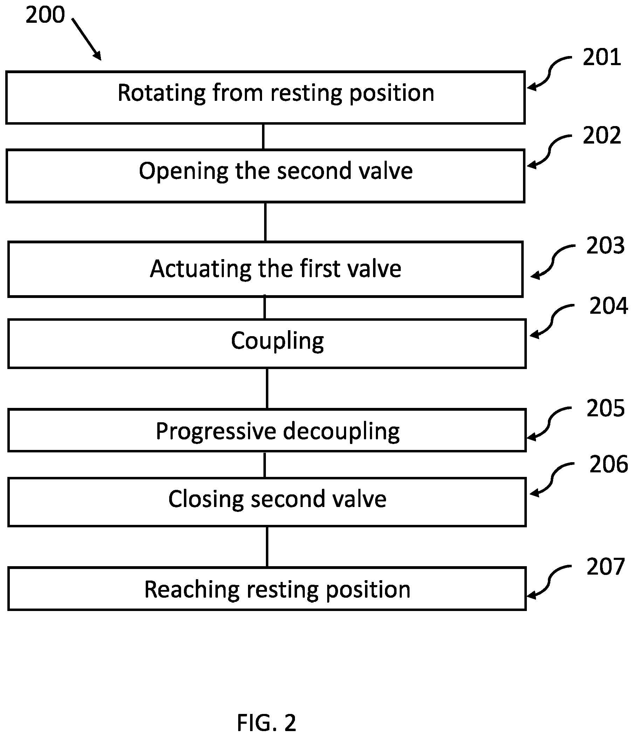

Figure 2 illustrates an example cooling method 200 for a thermal engine, the cooling method comprising operating any viscous fluid clutch according to this invention The cooling method may in some examples comprise operating a cooling system comprising any one of the viscous fluid clutches hereby described and a fan, the fan being fixedly supported by the housing, rotation of the fan through rotation of the housing generating an air flow cooling the thermal engine.

The example cooling method 200 comprises in block 201 rotating the drive shaft from a resting position to a threshold angular speed, whereby at least 80% of the viscous fluid is in the storage chamber at the resting position regardless of an angular position of the drive shaft in the resting position. It should be understood that an angular speed of the drive shaft is zero when the drive shaft is in the resting position. This may for example correspond to the thermal engine being turned off. In the resting position, at least 80% of the viscous fluid is in the storage chamber. This should be understood in that at least 80% of the viscous fluid by volume is in the storage chamber. In some examples, 100% of the viscous fluid is comprised in the storage chamber, work chamber and connections between the work and storage chambers. In some examples, 100% of the viscous fluid is comprised in the hermetic enclosure comprising the connected storage and work chambers. In the resting position according to this invention a relatively low percentage of viscous fluid is in the work chamber, such that coupling between the housing and the clutch plate is reduced or inexistent when the drive shaft starts turning from the resting position. Such repartition of the viscous fluid at the resting position is regardless of an angular position of the drive shaft in the resting position. The viscous fluid clutch according to this invention indeed prevents or reduces viscous fluid migration in a resting position regardless of the resting position concerned. In some examples, at least 85% of the viscous fluid is in the storage chamber at the resting position regardless of an angular position of the drive shaft in the resting position. In some examples, at least 90% of the viscous fluid is in the storage chamber at the resting position regardless of an angular position of the drive shaft in the resting position. In some examples, at least 95% of the viscous fluid is in the storage chamber at the resting position regardless of an angular position of the drive shaft in the resting position. In some examples, at least 98% of the viscous fluid is in the storage chamber at the resting position regardless of an angular position of the drive shaft in the resting position. All % of viscous fluid in this description should be understood as volume %.

The example cooling method 200 comprises in block 202 opening the second valve when reaching a threshold angular speed of the drive shaft. Such threshold angular speed, or threshold angular velocity, corresponds to the generation by rotation of the drive shaft of a centrifuge force exceeding the predetermined centrifuge force threshold which moved the second valve to the open position. Such opening of the second valve renders the viscous fluid supply connection dependent on the state of the first valve. If both the first and second valves are open, viscous fluid may pass from the storage chamber to the work chamber. If the second valve is open and the first valve is closed, the viscous fluid may not pass or flow from the storage chamber to the work chamber.

The example cooling method 200 comprises in block 203 permitting passage of the viscous fluid from the storage chamber to the work chamber by actuating the first valve when the second valve is open to progressively fill the work chamber with the viscous fluid. Such progressive filling of the work chamber with the viscous fluid may not necessarily reach a state of the work chamber being completely full with viscous fluid. Such progressive filling may be a discontinuous process, whereby the first valve may open intermittently while the second valve remains open as long as the rotation of the drive shaft remains at an angular speed in excess of the threshold angular speed.

The example cooling method 200 comprises in block 204 progressively coupling the housing with the clutch plate as the work chamber is progressively filled with the viscous fluid. The coupling between the clutch plate and the housing increases as the quantity of viscous fluid present in the work chamber increases. An increased coupling may for example result in an angular speed of the housing becoming closer to an angular speed of the clutch plate.

The example cooling method 200 comprises in block 205 preventing passage of the viscous fluid from the storage chamber to the work chamber by closing the first valve when the third valve is open, the viscous fluid progressively returning from the work chamber back to the storage chamber through the third valve to progressively decouple the housing from the clutch plate. Closing the first valve according to this invention prevents replenishing the work chamber with viscous fluid from the storage chamber. The third valve being a one-way valve permitting the passage of viscous fluid from the work chamber to the storage chamber when the viscous fluid applies on the third valve a pressure which exceeds a predetermined viscous fluid pressure threshold, the third valve lets the passage of viscous fluid from the work chamber to the storage chamber when open, the opening of such third valve being for example due to the viscous fluid attaining the predetermined viscous fluid pressure threshold due to an accumulation of such viscous fluid at a periphery of the work chamber due to centrifugal force produced by the rotation of the drive shaft, such accumulated fluid being pushed through the third valve towards the storage chamber by a pressure generated by the difference in angular velocity between the housing and the clutch plate. This combination of viscous fluid entering the storage chamber from the work chamber through the third valve, and of viscous fluid being preventing to return from the storage chamber into the work chamber through the first valve closure leads to increasing the amount of viscous fluid in the storage chamber and to correspondingly decrease the amount of viscous fluid in the work chamber leading to the progressive decoupling of the housing from the clutch plate.

The example cooling method 200 comprises in block 206 closing the second valve by reducing the angular speed of the drive shaft below the threshold angular speed of the drive shaft. Such reduction of the angular speed of the drive shaft may for example take place when the speed of the thermal engine reduces. When the angular speed of the drive shaft falls below the threshold angular speed, the second valve gets closed due to the fact that the second valve is movable to a closed position by a centrifuge force generated by rotation of the drive shaft falling under the predetermined centrifuge force threshold. Such closing of the second valve prepares for example the clutch for attaining a position corresponding to a resting position of the drive shaft, whereby the second valve closes the viscous fluid supply connection regardless of the state of the first valve. This participates in avoiding or reducing migration of the viscous fluid from the storage chamber to the work chamber at low or zero angular speed of the drive shaft, thereby preparing for providing a start from resting position with little or no coupling. This is particularly advantageous considering that in a number of examples an engine does not require cooling when starting to operate. In fact, in a number of examples, it is desirable for an engine to heat up in a starting phase, in which case coupling of a fan during a starting phase may negatively impact engine performance. The viscous fluid clutch according to this description avoids or reduces such negative impact. The example cooling method 200 indeed further comprises in block 207 reaching the resting position, such resting position being in some examples reached with at least 80% of the viscous fluid is in the storage chamber due to the structure of the viscous fluid clutch according to this invention In some examples, an amount of viscous fluid remaining in the work chamber when the drive shaft is in the resting position does not entirely permit decoupling the housing from the clutch plate, even if such coupling is reduced.

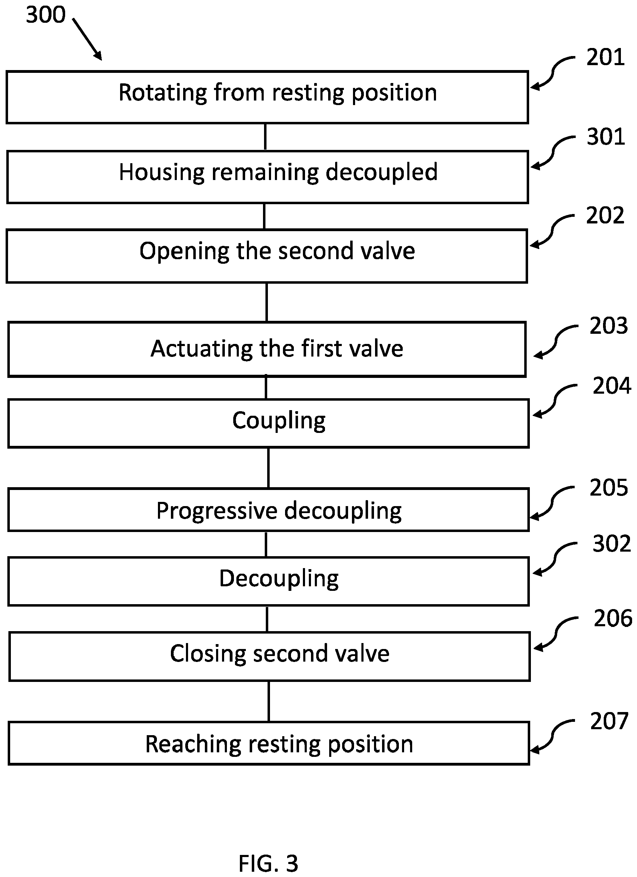

Another example cooling method 300 according to this invention is illustrated in Figure 3. Such method 300 comprises blocks 201-207 which correspond to and operate as described for blocks 201-207 of method 200 of Figure 2. In addition to this, method 300 comprises a block 302 of decoupling the housing from the drive shaft as a result of returning viscous fluid from the work chamber back to the storage chamber through the third valve so that at least 95% of the viscous fluid is in the storage chamber, such percentage being by volume of viscous fluid. Block 302 differs from block 205 in that block 205 corresponds to reducing coupling, while not necessarily suppress coupling. Such high percentage of viscous fluid in the storage chamber should ensure complete or almost complete decoupling of the housing from the clutch plate, such that the housing would remain in standstill during a rotation of the clutch plate. Such decoupling may take place before, during or after closing of the second valve as per block 206.

Method 300 also comprises in block 301 whereby the housing is remaining decoupled from the drive shaft at least while the drive shaft is rotating from any resting position and up to the threshold angular speed as a result of decoupling the housing from the drive shaft as per block 302. Such decoupling is maintained at least up to the threshold angular speed being reached due to the second valve remaining closed. The decoupling may be maintained for drive shaft angular speeds higher than the threshold angular speed if for example the first valve is maintained closed, even after opening the second valve. This may for example ensure that a fan does not cool the engine when such cooling is not desired, or even counterproductive.

Any method hereby described, such as for example methods 200 or 300, may comprise in block 205 , venting gas from the storage chamber to the work chamber through the vent as the viscous fluid is progressively returning from the work chamber back to the storage chamber through the third valve to progressively decouple the housing from the clutch plate as the first valve is closed, the amount of venting through the vent corresponding to the amount of fluid progressively returning from the work chamber back to the storage chamber through the third valve. Such venting may indeed reduce a pressure differential between the storage chamber and the work chamber, avoiding that the storage chamber would tend to have an internal pressure higher than the internal pressure of the work chamber and prevent or render more difficult return of viscous fluid from the work chamber to the storage chamber. Such venting may for example accelerate or ease return of viscous fluid from the work chamber to the storage chamber, thereby contributing to decouple the housing from the clutch plate when desired.

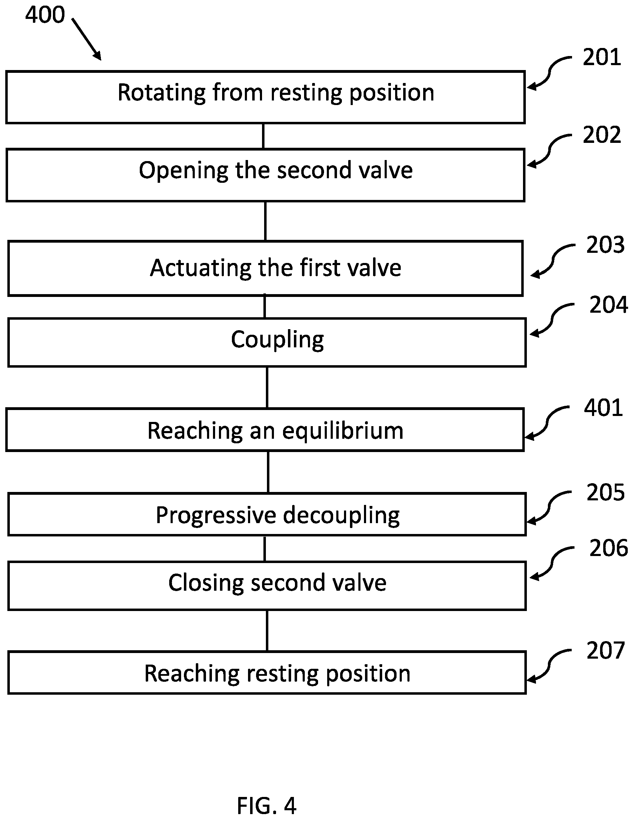

Another example cooling method 400 according to this invention is illustrated in Figure 4. Such method 400 comprises blocks 201-207 which correspond to and operate as described for blocks 201-207 of method 200 of Figure 2. Such method 400 could also comprise block 301 and 302 of Figure 3. In addition to this, method 400 comprises a block 401 of reaching an equilibrium situation while permitting passage of the viscous fluid from the storage chamber to the work chamber by actuating the first valve when the second valve is open, such that the amount of viscous fluid passing through the first and second valves from the storage chamber to the work chamber corresponds to an amount of viscous fluid passing through the third valve from the work chamber to the storage chamber. Such an equilibrium corresponds for example to proceed with blocks 204 and 205 concurrently or at a frequency such that equilibrium is reached, whereby the amount of fluid promoting coupling by passing through the supply connection corresponds to or is equal to the amount of fluid passing through the return connection. Such equilibrium may be maintained by operating the first valve. The first valve may indeed be actively driven, while the second and third valves may be considered as passive in that their behavior directly depends on the status of the system (fluid pressure and angular speed) whereas the first valve may be controlled independently of the system status.

In some examples which may apply to any of the methods hereby described, the method further comprising actuating the first valve using pulse width modulation.

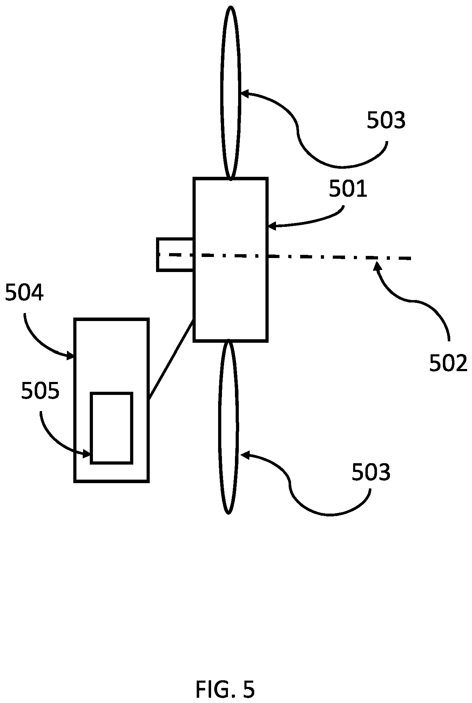

Figure 5 illustrates an example viscous fluid clutch 501 according to any of the viscous fluid clutches hereby described, the clutch having a rotation axis 502 corresponding to an axis of the drive shaft which may be powered by an engine (not represented here), whereby the clutch 501 comprises fan blades 503 which are fixed to the housing of clutch 501. The clutch and the fan fixedly supported by the housing form a cooling system according to this invention In this figure 5, the cooling system is connected to an electronic control unit 504, the electronic control unit 504 being the electronic control unit of a pulse width modulation generator comprising a controller 505 configured to perform according to any of the methods hereby described.

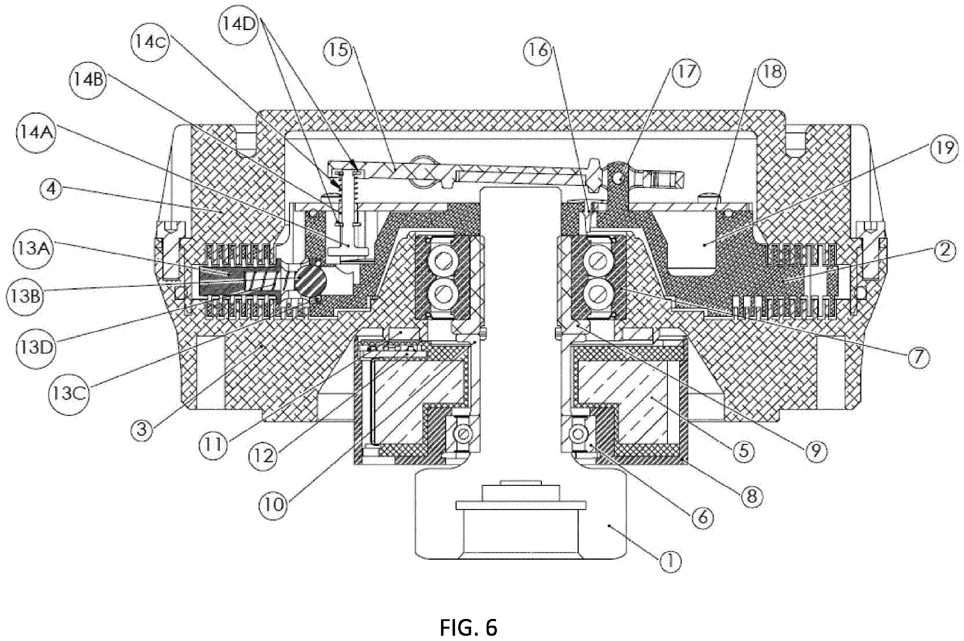

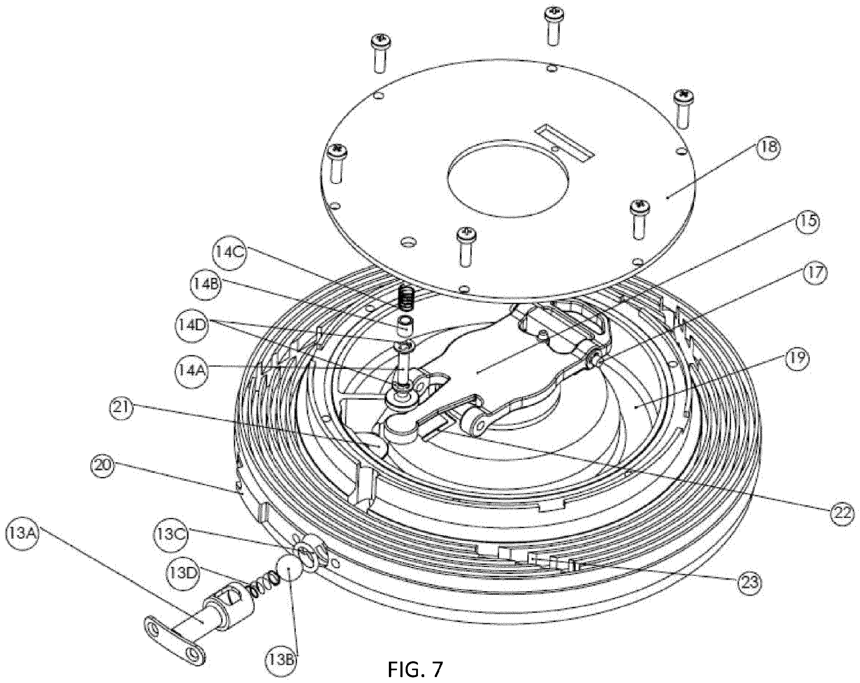

Figure 6 illustrates a cross section of another viscous fluid clutch according to this invention The same viscous fluid clutch is illustrated in Figure 7 as an exploded view. The reference numerals used in Figures 6 and 7 are the same for the same elements.

The drive shaft 1 in the example of figure 6 is threaded onto a main part 2 of the clutch plate, the clutch plate further comprising cover 18, cover 18 and main part 2 of the clutch plate being held together by bolts. Other assembly techniques may be used comprising gluing or riveting for example. In this example, the clutch plate has a circular perimeter and comprises concentric ridges in an annular area bordering the perimeter, the housing comprising concentric grooves matching the concentric ridges. The housing in this example comprises pieces 3 and 4 which are held together by bolts. Other assembly techniques may be used comprising gluing or riveting for example. Making the housing of two parts in this manner may facilitate manufacturing or mounting of the clutch, even though a unitary housing may be in other examples used, for example when a clutch or elements of a clutch are manufactured using 3D printing or additive manufacturing. In this example, the clutch comprises the first valve 14 which is an electromagnetic valve, the viscous fluid clutch comprising a solenoid coil 5 rotatably supported by the drive shaft 1 and nested in the housing 3, wherein the drive shaft 1 comprises a soft magnetic material to act as an armature of the solenoid coil 5 in order to actuate the electromagnetic valve 14. In this example, the clutch plate 2 is placed between the electromagnetic valve 14 and the solenoid coil 5. In this example, the first valve 14 comprises a lever 15, the lever comprising a first end 17 hingedly supported by the clutch plate and a second end engaging a stem 14A of the first valve 14. In this example, the second valve 13 comprises a mobile body 13B, the mobile body 13B being encaged in a cavity, the cavity being comprised in the clutch plate 2, the mobile body 13B being moveable from a first position to a second position within the cavity, the first position being radially closer to a rotation axis of the drive shaft than the second position, whereby the second valve 13 is closed (as represented in Figure 6) when the mobile body 13B is in the first position, and open when the mobile body 13B is in the second position. In this example, the cavity is elongated radially in relation to the rotation axis of the drive shaft 1. In this example, the second valve 13 comprises a spring 13D, the spring applying to the mobile body 13B a force urging the mobile body 13B towards the first position.

In this example of Figures 6 and 7, the first valve 14 further comprises a spring 14C, a shell 14B and retainers 14D. The second valve 13 further comprises a valve body or stem 13A and a sealing valve seat 13C. The clutch comprises vent 16 according to this invention vent 16 being connected to channel 22. The clutch also comprises a bearing 6 rotatably connecting solenoid coil 5 to the drive shaft, bearing 7 rotatably connecting the housing to the drive shaft, a protecting shell 8 for the solenoid coil 5, an aluminum, or nonmagnetic, sleeve 9 between bearing 7 and the drive shaft and a steel, or magnetic, sleeve 10 between the solenoid coil 5 and the drive shaft 1, an annular permanent magnet ring 11 comprising alternating magnetic poles and fixedly connected to the housing, a hall sensor 12 facing the annular permanent magnet ring and permitting sensing a rotation speed in conjunction with the magnetic poles of the annular permanent magnet ring, the solenoid coil 5 and the hall sensor 12 being fixedly connected to a support which is not illustrated. The clutch further comprises pump 20 which extends away from the perimeter of the clutch plate, pump 20 pushing viscous fluid from the work chamber into the storage chamber through the return connection according to this invention towards one-way valve 21 which is the third valve according to this invention This example clutch further comprises a number of trenches 23 participating in distributing the viscous fluid through the work chamber.

## Claims

1. A viscous fluid clutch (100) comprising:
- a clutch plate (101, 2) and a drive shaft (102, 1), the clutch plate (101, 2) being fixedly driven by the drive shaft (102, 1);
- a housing (103, 3, 4) rotatably supported by the drive shaft (102, 1), the housing (103, 3, 4) surrounding the clutch plate (101, 2), the housing (103, 3, 4) comprising a work chamber (105) defining a shear space for the viscous fluid between the housing (103, 3, 4) and the clutch plate (101, 2);
- a storage chamber (106, 19) for the viscous fluid, whereby the storage chamber (106, 19) is comprised in the clutch plate (101, 2);
- a viscous fluid supply connection (107) and a viscous fluid return connection (108) connecting the storage chamber (106, 19) and the work chamber (105), whereby the viscous fluid return connection (108) and the viscous fluid supply (107) connection are comprised within the clutch plate (101, 2);
- a first valve (109, 14 A-D) located in the supply connection, the first valve (109, 14 A-D) permitting to selectively increase the quantity of viscous fluid present in the work chamber (105);
**characterized in that**, the viscous fluid clutch is further comprising:
- a second valve (110, 13 A-D) located in the supply connection and closing the supply passage when the drive shaft (102, 1) is at rest, the second valve (110, 13 A-D) being movable to an open position by a centrifuge force generated by rotation of the drive shaft (102, 1) exceeding a predetermined centrifuge force threshold;
- a third valve (111, 21) located in the viscous fluid return connection (108), the third valve (111, 21) being a one-way valve selectively permitting the passage of viscous fluid from the work chamber (105) to the storage chamber (106, 19) when the viscous fluid applies on the third valve (111, 21) a pressure which exceeds a predetermined viscous fluid pressure threshold;
- a vent (112, 16) for venting gas from the storage chamber (106, 19) to the work chamber (105);
whereby an enclosure comprising the connected storage (106, 19) and work (105) chambers is hermetic.

2. The viscous fluid clutch according to claim 1, whereby the first valve (109, 14 A-D) is an electromagnetic valve, the viscous fluid clutch comprising a solenoid coil (5) rotatably supported by the drive shaft (102, 1) and nested in the housing (103, 3, 4), wherein the drive shaft (102, 1) comprises a soft magnetic material to act as an armature of the solenoid coil (5) in order to actuate the electromagnetic valve, the clutch plate (101, 2) being placed between the electromagnetic valve and the solenoid coil (5).

3. The viscous fluid clutch according to claim 2, whereby the first valve (109, 14 A-D) comprises a lever (15), the lever comprising a first end (17) hingedly supported by the clutch plate (101, 2) and a second end engaging a stem (14A) of the first valve (109, 14 A-D).

4. The viscous fluid clutch according to any of the above claims, the clutch plate (101, 2) having a circular perimeter and comprising concentric ridges in an annular area bordering the perimeter, the housing (103, 3, 4) comprising concentric grooves matching the concentric ridges.

5. The viscous fluid clutch according to any of the above claims, whereby the second valve (110, 13 A-D) is movable to an open position by a force generated by pressure from the viscous fluid in addition to the centrifuge force generated by rotation of the drive shaft (102, 1).

6. The viscous fluid clutch according to any of the above claims, whereby the second valve (110, 13 A-D) comprises a mobile body (13B), the mobile body (13B) being encaged in a cavity, the cavity being comprised in the clutch plate (101, 2), the mobile body (13B) being moveable from a first position to a second position within the cavity, the first position being radially closer to a rotation axis of the drive shaft (102, 1) than the second position, whereby the second valve (110, 13 A-D) is closed when the mobile body (13B) is in the first position, and open when the mobile body is in the second position.

7. The viscous fluid clutch according to claim 6, whereby the cavity is elongated radially in relation to the rotation axis of the drive shaft (102, 1).

8. The viscous fluid clutch according to claim 6 or to claim 7, whereby second valve (110, 13 A-D) comprises a spring (13D), the spring (13D) applying to the mobile body a force urging the mobile body towards the first position.

9. A cooling system comprising the viscous fluid clutch according to any of the above claims and a fan, the fan being fixedly supported by the housing (103, 3, 4).

10. A cooling method for a thermal engine, the cooling method comprising operating the viscous fluid clutch according to any of claims 1 to 8, the method comprising:
- rotating (201) the drive shaft from a resting position to a threshold angular speed, whereby at least 80% of the viscous fluid is in the storage chamber (106, 19) at the resting position regardless of an angular position of the drive shaft in the resting position;
- when reaching a threshold angular speed of the drive shaft, opening (202) the second valve (110, 13 A-D);
- permitting passage of the viscous fluid from the storage chamber (106, 19) to the work chamber (105) by actuating (203) the first valve (109, 14 A-D) when the second valve (110, 13 A-D) is open to progressively fill the work chamber (105) with the viscous fluid;
- progressively coupling (204) the housing (103, 3, 4) with the clutch plate (101, 2) as the work chamber (105) is progressively filled with the viscous fluid;
- preventing passage of the viscous fluid from the storage chamber (106, 19) to the work chamber (105) by closing the first valve (109, 14 A-D) when the third valve (111, 21) is open, the viscous fluid progressively returning from the work chamber (105) back to the storage chamber (106, 19) through the third valve (111, 21) to progressively decouple (205) the housing (103, 3, 4) from the clutch plate (101, 2);
- reducing the angular speed of the drive shaft below the threshold angular speed of the drive shaft, closing (206) the second valve (110, 13 A-D); and
- reaching (207) the resting position.

11. The cooling method according to claim 10 further comprising:
- decoupling (302) the housing (103, 3, 4) from the drive shaft as a result of returning viscous fluid from the work chamber (105) back to the storage chamber (106, 19) through the third valve (111, 21) so that at least 95% of the viscous fluid is in the storage chamber (106, 19); and
- as a result of decoupling the housing (103, 3, 4) from the drive shaft, the housing (103, 3, 4) is remaining (301) decoupled from the drive shaft at least while the drive shaft is rotating from any resting position and up to the threshold angular speed.

12. The cooling method according to any one of claims 10 or 11, the method further comprising:
- as the viscous fluid is progressively returning from the work chamber (105) back to the storage chamber (106, 19) through the third valve (111, 21) to progressively decouple the housing (103, 3, 4) from the clutch plate (101, 2) as the first valve (109, 14 A-D) is closed, venting gas from the storage chamber (106, 19) to the work chamber (105) through the vent (112, 16), the amount of venting through the vent (112, 16) corresponding to the amount of fluid progressively returning from the work chamber (105) back to the storage chamber (106, 19) through the third valve (111, 21).

13. The cooling method according to any one of claims 10 to 12, the method further comprising:
- reaching an equilibrium situation while permitting passage of the viscous fluid from the storage chamber (106, 19) to the work chamber (105) by actuating the first valve (109, 14 A-D) when the second valve (110, 13 A-D) is open, such that the amount of viscous fluid passing through the first (109, 14 A-D) and second (110, 13 A-D) valves from the storage chamber (106, 19) to the work chamber (105) corresponds to an amount of viscous fluid passing through the third valve (111, 21) from the work chamber (105) to the storage chamber (106, 19).

14. The cooling method according to any one of claims 10 to 13, the method further comprising actuating the first valve (109, 14 A-D) using pulse width modulation.

## Patentansprüche

1. Viskositätsfluidkupplung (100), umfassend:
- eine Kupplungsscheibe (101, 2) und eine Antriebswelle (102, 1), wobei die Kupplungsscheibe (101, 2) von der Antriebswelle (102, 1) fest angetrieben wird;
- ein Gehäuse (103, 3, 4), das drehbar von der Antriebswelle (102, 1) gelagert wird, wobei das Gehäuse (103, 3, 4) die Kupplungsscheibe (101, 2) umgibt, wobei das Gehäuse (103, 3, 4) eine Arbeitskammer (105) umfasst, die einen Scherraum für das viskose Fluid zwischen dem Gehäuse (103, 3, 4) und der Kupplungsscheibe (101, 2) definiert;
- eine Speicherkammer (106, 19) für das viskose Fluid, wobei die Speicherkammer (106, 19) in der Kupplungsscheibe (101, 2) enthalten ist;
- eine Zufuhrverbindung (107) für viskoses Fluid und eine Rückführverbindung (108) für viskoses Fluid, die die Speicherkammer (106, 19) und die Arbeitskammer (105) verbinden, wobei die Rückführverbindung (108) für viskoses Fluid und die Zufuhrverbindung (107) für viskoses Fluid in der Kupplungsscheibe (101, 2) enthalten sind;
- ein erstes Ventil (109, 14 A-D), das in der Zufuhrverbindung angeordnet ist, wobei das erste Ventil (109, 14 A-D) es gestattet, die in der Arbeitskammer (105) vorhandene Menge an viskosem Fluid selektiv zu erhöhen;
**dadurch gekennzeichnet, dass** die viskose Fluidkupplung ferner Folgendes umfasst:
- ein zweites Ventil (110, 13 A-D), das in der Zufuhrverbindung angeordnet ist und den Zufuhrkanal schließt, wenn die Antriebswelle (102, 1) stillsteht, wobei das zweite Ventil (110, 13 A-D) durch eine Zentrifugalkraft in eine offene Position bewegbar ist, die durch Rotation der Antriebswelle (102, 1) erzeugt wird, die einen vorbestimmten Zentrifugalkraftschwellenwert überschreitet;
- ein drittes Ventil (111, 21), das in der Rückführverbindung (108) für viskoses Fluid angeordnet ist, wobei das dritte Ventil (111, 21) ein Einwegventil ist, das selektiv den Durchgang von viskosem Fluid von der Arbeitskammer (105) zur Speicherkammer (106, 19) gestattet, wenn das viskose Fluid auf das dritte Ventil (111, 21) einen Druck ausübt, der einen vorbestimmten Druckschwellenwert des viskosen Fluids übersteigt;
- eine Lüftungsöffnung (112, 16) zum Entlüften von Gas aus der Speicherkammer (106, 19) in die Arbeitskammer (105);
wodurch ein Gehäuse, das die verbundenen Speicher- (106, 19) und Arbeitskammer (105) umfasst, hermetisch ist.

2. Viskositätsfluidkupplung nach Anspruch 1, wobei das erste Ventil (109, 14 A, D) ein elektromagnetisches Ventil ist, wobei die Viskositätsfluidkupplung eine Solenoidspule (5) umfasst, die drehbar durch die Antriebswelle (102, 1) gelagert und in das Gehäuse (103, 3, 4) eingebettet ist, wobei die Antriebswelle (102, 1) ein weichmagnetisches Material umfasst, um als Anker der Solenoidspule (5) zu wirken, um das elektromagnetische Ventil zu betätigen, wobei die Kupplungsscheibe (101, 2) zwischen dem elektromagnetischen Ventil und der Magnetspule (5) angeordnet ist.

3. Viskositätsfluidkupplung nach Anspruch 2, wobei das erste Ventil (109, 14 A-D) einen Hebel (15) umfasst, wobei der Hebel ein erstes Ende (17) umfasst, das gelenkig von der Kupplungsscheibe (101,2) gelagert wird, und ein zweites Ende, das in einen Schaft (14A) des ersten Ventils (109, 14 A-D) eingreift.

4. Viskositätsfluidkupplung nach einem der vorherstehenden Ansprüche, wobei die Kupplungsscheibe (101, 2) einen kreisförmigen Umfang aufweist und konzentrische Rippen in einem ringförmigen Bereich umfasst, der an den Umfang angrenzt, wobei das Gehäuse (103, 3, 4) konzentrische Nuten umfasst, die mit den konzentrischen Rippen zusammenpassen.

5. Viskositätsfluidkupplung nach einem der vorherstehenden Ansprüche, wobei das zweite Ventil (110, 13 A-D) durch eine Kraft, die durch Druck von dem viskosen Fluid erzeugt wird, zusätzlich zu der Zentrifugalkraft, die durch Rotation der Antriebswelle (102, 1) erzeugt wird, in eine offene Position bewegbar ist.

6. Viskositätsfluidkupplung nach einem der vorherstehenden Ansprüche, wobei das zweite Ventil (110, 13 A-D) einen beweglichen Körper (13B) umfasst, wobei der bewegliche Körper (13B) in einem Hohlraum eingeschlossen ist, wobei der Hohlraum in der Kupplungsscheibe (101, 2) enthalten ist, wobei der bewegliche Körper (13B) von einer ersten Position in eine zweite Position innerhalb des Hohlraums bewegbar ist, wobei die erste Position radial näher an einer Rotationsachse der Antriebswelle (102, 1) liegt als die zweite Position, wodurch das zweite Ventil (110, 13 A-D) geschlossen ist, wenn sich der bewegliche Körper (13B) in der ersten Position befindet, und offen ist, wenn sich der bewegliche Körper in der zweiten Position befindet.

7. Viskositätsfluidkupplung nach Anspruch 6, wobei der Hohlraum in Bezug auf die Rotationsachse der Antriebswelle (102, 1) radial langgestreckt ist.

8. Viskositätsfluidkupplung nach Anspruch 6 oder Anspruch 7, wobei das zweite Ventil (110, 13 A-D) eine Feder (13D) umfasst, wobei die Feder (13D) eine Kraft auf den beweglichen Körper ausübt, die den beweglichen Körper in Richtung der ersten Position drängt.

9. Kühlsystem, umfassend die Viskositätsfluidkupplung nach einem der vorherstehenden Ansprüche und einen Lüfter, wobei der Lüfter durch das Gehäuse (103, 3, 4) fest gelagert ist.

10. Kühlverfahren für eine Wärmekraftmaschine, wobei das Kühlverfahren das Betreiben der Viskositätsfluidkupplung nach einem der Ansprüche 1 bis 8 umfasst, wobei das Verfahren Folgendes umfasst:
- Rotieren (201) der Antriebswelle aus einer Ruheposition auf eine Schwellenwinkelgeschwindigkeit, wodurch mindestens 80 % des viskosen Fluids sich in der Speicherkammer (106, 19) in der Ruheposition befinden, unabhängig von einer Winkelposition der Antriebswelle in der Ruheposition;
- Öffnen (202) des zweiten Ventils (110, 13 A-D) bei Erreichen einer Schwellenwinkelgeschwindigkeit der Antriebswelle;
- Zulassen des Durchgangs des viskosen Fluids von der Speicherkammer (106, 19) zu der Arbeitskammer (105) durch Betätigen (203) des ersten Ventils (109, 14 A-D), wenn das zweite Ventil (110, 13 A-D) offen ist, um die Arbeitskammer (105) mit dem viskosen Fluid zunehmend zu füllen;
- zunehmendes Koppeln (204) des Gehäuses (103, 3, 4) mit der Kupplungsscheibe (101, 2), wenn die Arbeitskammer (105) zunehmend mit dem viskosen Fluid gefüllt wird;
- Verhindern des Durchgangs des viskosen Fluids von der Speicherkammer (106, 19) zu der Arbeitskammer (105) durch Schließen des ersten Ventils (109, 14 A-D), wenn das dritte Ventil (111, 21) offen ist, wobei das viskose Fluid zunehmend durch das dritte Ventil (111, 21) von der Arbeitskammer (105) zurück zu der Speicherkammer (106, 19) zurückströmt, um das Gehäuse (103, 3, 4) zunehmend von der Kupplungsscheibe (101, 2) zu entkoppeln (205);
- Reduzieren der Winkelgeschwindigkeit der Antriebswelle unter die Schwellenwinkelgeschwindigkeit der Antriebswelle, Schließen (206) des zweiten Ventils (110, 13 A-D); und
- Erreichen (207) der Ruheposition.

11. Kühlverfahren nach Anspruch 10, ferner umfassend:
- Entkoppeln (302) des Gehäuses (103, 3, 4) von der Antriebswelle als Folge der Rückströmung des viskosen Fluids aus der Arbeitskammer (105) zurück in die Speicherkammer (106, 19) durch das dritte Ventil (111, 21), so dass sich mindestens 95 % des viskosen Fluids in der Speicherkammer (106, 19) befinden; und
- als Folge des Entkoppelns des Gehäuses (103, 3, 4) von der Antriebswelle bleibt (301) das Gehäuse (103, 3, 4) von der Antriebswelle entkoppelt, zumindest während die Antriebswelle aus jeglicher Ruheposition und bis zur Schwellenwinkelgeschwindigkeit rotiert.

12. Kühlverfahren nach einem der Ansprüche 10 oder 11, wobei das Verfahren ferner Folgendes umfasst:
- da die viskose Fluid zunehmend durch das dritte Ventil (111, 21) aus der Arbeitskammer (105) zurück in die Speicherkammer (106, 19) zurückströmt, um das Gehäuse (103, 3, 4) zunehmend von der Kupplungsscheibe (101, 2) zu entkoppeln, wenn das erste Ventil (109, 14 A-D) geschlossen ist, Entlüften von Gas aus der Speicherkammer (106, 19) in die Arbeitskammer (105) durch die Lüftungsöffnung (112, 16), wobei die Entlüftungsmenge durch die Lüftungsöffnung (112, 16) der Fluidmenge entspricht, die zunehmend durch das dritte Ventil (111, 21) aus der Arbeitskammer (105) in die Speicherkammer (106, 19) zurückströmt.

13. Kühlverfahren nach einem der Ansprüche 10 bis 12, wobei das Verfahren ferner Folgendes umfasst:
- Erreichen einer Gleichgewichtssituation, während der Durchgang des viskosen Fluids von der Speicherkammer (106, 19) zu der Arbeitskammer (105) gestattet wird, indem das erste Ventil (109, 14 A-D) betätigt wird, wenn das zweite Ventil (110, 13 A-D) offen ist, so dass die Menge an viskosem Fluid, die durch das erste (109, 14 A-D) und das zweite (110, 13 A-D) Ventil von der Speicherkammer (106, 19) zu der Arbeitskammer (105) strömt, einer Menge an viskosem Fluid entspricht, die durch das dritte Ventil (111, 21) von der Arbeitskammer (105) zu der Speicherkammer (106, 19) strömt.

14. Kühlverfahren nach einem der Ansprüche 10 bis 13, wobei das Verfahren ferner das Betätigen des ersten Ventils (109, 14 A-D) unter Verwendung einer Impulsbreitenmodulation umfasst.

## Revendications

1. Embrayage de fluide visqueux (100) comprenant :
- une plaque d'embrayage (101, 2) et un arbre d'entraînement (102, 1), la plaque d'embrayage (101, 2) étant entraînée de manière fixe par l'arbre d'entraînement (102, 1) ;
- un boîtier (103, 3, 4) supporté de manière rotative par l'arbre d'entraînement (102, 1), le boîtier (103, 3, 4) entourant la plaque d'embrayage (101, 2), le boîtier (103, 3, 4) comprenant une chambre de travail (105) définissant un espace de cisaillement pour le fluide visqueux entre le boîtier (103, 3, 4) et la plaque d'embrayage (101, 2) ;
- une chambre de stockage (106, 19) pour le fluide visqueux, moyennant quoi la chambre de stockage (106, 19) est comprise dans la plaque d'embrayage (101, 2) ;
- un raccord d'alimentation en fluide visqueux (107) et un raccord de retour de fluide visqueux (108) raccordant la chambre de stockage (106, 19) et la chambre de travail (105), moyennant quoi le raccord de retour de fluide visqueux (108) et le raccord d'alimentation en fluide visqueux (107) sont compris dans la plaque d'embrayage (101, 2) ;
- une première vanne (109, 14 A-D) située dans le raccord d'alimentation, la première vanne (109, 14 A-D) permettant d'augmenter sélectivement la quantité de fluide visqueux présente dans la chambre de travail (105) ;
**caractérisé en ce que** l'embrayage de fluide visqueux comprend en outre :
- une deuxième vanne (110, 13 A-D) située dans le raccord d'alimentation et fermant le passage d'alimentation lorsque l'arbre d'entraînement (102, 1) est au repos, la deuxième vanne (110, 13 A-D) étant mobile jusqu'à une position ouverte par une force centrifuge générée par la rotation de l'arbre d'entraînement (102, 1) dépassant un seuil de force centrifuge prédéterminée ;
- une troisième vanne (111, 21) située dans le raccord de retour de fluide visqueux (108), la troisième vanne (111, 21) étant une vanne unidirectionnelle permettant sélectivement le passage de fluide visqueux depuis la chambre de travail (105) jusqu'à la chambre de stockage (106, 19) lorsque le fluide visqueux applique sur la troisième vanne (111, 21) une pression qui dépasse un seuil de pression de fluide visqueux prédéterminé ;
- un évent (112, 16) pour évacuer le gaz de la chambre de stockage (106, 19) vers la chambre de travail (105) ;
moyennant quoi une enceinte comprenant les chambres de stockage (106, 19) et de travail (105) raccordées est hermétique.

2. Embrayage de fluide visqueux selon la revendication 1, moyennant quoi la première vanne (109, 14 A-D) est une vanne électromagnétique, l'embrayage de fluide visqueux comprenant une bobine de solénoïde (5) supportée de manière rotative par l'arbre d'entraînement (102, 1) et emboîtée dans le boîtier (103, 3, 4), dans lequel l'arbre d'entraînement (102, 1) comprend un matériau magnétique doux pour servir d'induit de la bobine de solénoïde (5) afin d'actionner la vanne électromagnétique, la plaque d'embrayage (101, 2) étant placée entre la vanne électromagnétique et la bobine de solénoïde (5).

3. Embrayage de fluide visqueux selon la revendication 2, moyennant quoi la première vanne (109, 14 A-D) comprend un levier (15), le levier comprenant une première extrémité (17) supportée de manière articulée par la plaque d'embrayage (101, 2) et une deuxième extrémité venant en prise avec une tige (14A) de la première vanne (109, 14 A-D).

4. Embrayage de fluide visqueux selon l'une quelconque des revendications ci-dessus, la plaque d'embrayage (101, 2) présentant un périmètre circulaire et comprenant des arêtes concentriques dans une zone annulaire bordant le périmètre, le boîtier (103, 3, 4) comprenant des rainures concentriques correspondant aux arêtes concentriques.

5. Embrayage de fluide visqueux selon l'une quelconque des revendications ci-dessus, moyennant quoi la deuxième vanne (110, 13 A-D) est mobile jusqu'à une position ouverte par une force générée par une pression provenant du fluide visqueux en plus de la force centrifuge générée par la rotation de l'arbre d'entraînement (102, 1).

6. Embrayage de fluide visqueux selon l'une quelconque des revendications ci-dessus, moyennant quoi la deuxième vanne (110, 13 A-D) comprend un corps mobile (13B), le corps mobile (13B) étant encagé dans une cavité, la cavité étant comprise dans la plaque d'embrayage (101, 2), le corps mobile (13B) étant mobile d'une première position à une deuxième position dans la cavité, la première position étant radialement plus proche d'un axe de rotation de l'arbre d'entraînement (102, 1) que la deuxième position, moyennant quoi la deuxième vanne (110, 13 A-D) est fermée lorsque le corps mobile (13B) est dans la première position, et ouverte lorsque le corps mobile est dans la deuxième position.

7. Embrayage de fluide visqueux selon la revendication 6, moyennant quoi la cavité est allongée radialement par rapport à l'axe de rotation de l'arbre d'entraînement (102, 1).

8. Embrayage de fluide visqueux selon la revendication 6 ou la revendication 7, moyennant quoi la deuxième vanne (110, 13 A-D) comprend un ressort (13D), le ressort (13D) appliquant au corps mobile une force poussant le corps mobile vers la première position.

9. Système de refroidissement comprenant l'embrayage de fluide visqueux selon l'une quelconque des revendications ci-dessus et un ventilateur, le ventilateur étant supporté de manière fixe par le boîtier (103, 3, 4).

10. Procédé de refroidissement pour un moteur thermique, le procédé de refroidissement comprenant le fonctionnement de l'embrayage de fluide visqueux selon l'une quelconque des revendications 1 à 8, le procédé comprenant :
- la rotation (201) de l'arbre d'entraînement d'une position de repos à une vitesse angulaire seuil, moyennant quoi au moins 80 % du fluide visqueux est dans la chambre de stockage (106, 19) à la position de repos quelle que soit une position angulaire de l'arbre d'entraînement dans la position de repos ;
- lors de l'atteinte d'une vitesse angulaire seuil de l'arbre d'entraînement, l'ouverture (202) de la deuxième vanne (110, 13 A-D) ;
- l'autorisation du passage du fluide visqueux de la chambre de stockage (106, 19) à la chambre de travail (105) en actionnant (203) la première vanne (109, 14 A-D) lorsque la deuxième vanne (110, 13 A-D) est ouverte pour remplir progressivement la chambre de travail (105) avec le fluide visqueux ;
- le couplage progressif (204) du boîtier (103, 3, 4) avec la plaque d'embrayage (101, 2) à mesure que la chambre de travail (105) est progressivement remplie avec le fluide visqueux ;
- l'empêchement du passage du fluide visqueux de la chambre de stockage (106, 19) à la chambre de travail (105) en fermant la première vanne (109, 14 A-D) lorsque la troisième vanne (111, 21) est ouverte, le fluide visqueux retournant progressivement de la chambre de travail (105) à la chambre de stockage (106, 19) par le biais de la troisième vanne (111, 21) pour découpler progressivement (205) le boîtier (103, 3, 4) de la plaque d'embrayage (101, 2) ;
- la réduction de la vitesse angulaire de l'arbre d'entraînement sous la vitesse angulaire seuil de l'arbre d'entraînement, fermant (206) la deuxième vanne (110, 13 A-D) ; et
- l'atteinte (207) de la position de repos.

11. Procédé de refroidissement selon la revendication 10 comprenant en outre :
- le découplage (302) du boîtier (103, 3, 4) de l'arbre d'entraînement à la suite du retour de fluide visqueux de la chambre de travail (105) à la chambre de stockage (106, 19) par le biais de la troisième vanne (111, 21) de telle sorte qu'au moins 95 % du fluide visqueux se trouve dans la chambre de stockage (106, 19) ; et
- à la suite du découplage du boîtier (103, 3, 4) de l'arbre d'entraînement, le boîtier (103, 3, 4) reste (301) découplé de l'arbre d'entraînement au moins pendant que l'arbre d'entraînement tourne depuis toute position de repos et jusqu'à la vitesse angulaire seuil.

12. Procédé de refroidissement selon l'une quelconque des revendications 10 ou 11, le procédé comprenant en outre :
- à mesure que le fluide visqueux retourne progressivement de la chambre de travail (105) à la chambre de stockage (106, 19) par le biais de la troisième vanne (111, 21) pour découpler progressivement le boîtier (103, 3, 4) de la plaque d'embrayage (101, 2) quand la première vanne (109, 14 A-D) est fermée, l'évacuation du gaz de la chambre de stockage (106, 19) vers la chambre de travail (105) parle biais de l'évent (112, 16), la quantité d'évacuation par le biais de l'évent (112, 16) correspondant à la quantité de fluide retournant progressivement de la chambre de travail (105) à la chambre de stockage (106, 19) par le biais de la troisième vanne (111, 21).

13. Procédé de refroidissement selon l'une quelconque des revendications 10 à 12, le procédé comprenant en outre :
- l'atteinte d'une situation d'équilibre tout en autorisant le passage du fluide visqueux de la chambre de stockage (106, 19) à la chambre de travail (105) en actionnant la première vanne (109, 14 A-D) lorsque la deuxième vanne (110, 13 A-D) est ouverte, de telle sorte que la quantité de fluide visqueux traversant les première (109, 14 A-D) et deuxième (110, 13 A-D) vannes de la chambre de stockage (106, 19) à la chambre de travail (105) correspond à une quantité de fluide visqueux traversant la troisième vanne (111, 21) de la chambre de travail (105) à la chambre de stockage (106, 19).

14. Procédé de refroidissement selon l'une quelconque des revendications 10 à 13, le procédé comprenant en outre l'actionnement de la première vanne (109, 14 A-D) à l'aide d'une modulation en largeur d'impulsion.
